# FASCICULE DE BREVET EUROPEEN

(11) **EP 1 960 707 B1**
(45) Date de publication et mention de la délivrance du brevet: **13.04.2016**
(21) Numéro de dépôt: 06842097.5
(22) Date de dépôt: 06.12.2006
(51) Int. Cl.: F16P 3/14

(54) **PROCÉDÉ DE GESTION DE SÉCURITÉ ACTIVE POUR UNE MACHINE DE TRAVAIL AUTOMATIQUE**
VERFAHREN ZUR VERWALTUNG DER AKTIVEN SICHERHEIT FÜR EINE AUTOMATISCH BETRIEBENE MASCHINE
METHOD FOR MANAGING AN ACTIVE SAFETY FOR AN AUTOMATICALLY OPERATING MACHINE

(30) Priorité: 07.12.2005 FR 0553759
(43) Date de publication de la demande: 27.08.2008
(73) Titulaire: Lectra, 75016 Paris (FR)
(72) Inventeur: LERISSON, Jean-Pierre, F-33600 Pessac (FR); SANCHEZ, Alain, F-33600 Pessac (FR)
(74) Mandataire: Boura, Olivier
(86) Numéro de dépôt international: PCT/FR2006/051286
(87) Numéro de publication internationale: WO 2007/066040

(56) Documents cités:
- WO-A-2006/024431
- DE-A1- 10 324 628

## Description

### Arrière-plan de l'invention

La présente invention concerne un procédé de gestion de sécurité active pour une machine de travail automatique.

Le domaine d'application de l'invention est particulièrement celui des machines automatiques de découpe, de traçage ou de gravage avec lesquelles un outil de travail, tel qu'un outil de découpe, d'écriture ou de gravage, est déplacé dans un plan de travail selon un programme préétabli pour découper, tracer ou graver une matière déposée sur le plan de travail.

Il en est ainsi notamment avec les machines de découpe à commande numérique utilisées pour la découpe de tissus, feutres, cuirs ou autres matériaux souples en feuille dans l'industrie de la confection, de l'ameublement... Dans ces machines, la découpe est effectuée au moyen d'une lame vibrante, d'une molette, d'un faisceau laser, ou d'un jet d'eau sous pression porté par une tête de coupe qui est déplacée par rapport au matériau dans le plan de travail suivant deux directions différentes et selon un programme de découpe préétabli. Le matériau peut être disposé en nappes superposées formant un matelas de manière à réaliser plusieurs découpes simultanées.

Ce type de machine de découpe peut également comprendre un système d'aspiration d'air mettant en dépression un caisson étanche qui se trouve sous le plan de travail. En recouvrant le matériau à découper par un film de matière imperméable à l'air, le matériau à découper est plaqué sur le plan de travail sous l'effet conjugué de la pression atmosphérique appliquée sur le matériau et de la dépression entretenue dans le caisson étanche.

La présence et l'intervention d'opérateurs sont nécessaires au cours du déroulement du programme de découpe, notamment lors des opérations de préparation de la découpe (telles que l'installation du matériau à découper, la couverture du matériau par le film imperméable à l'air et le contrôle du travail effectué par l'outil de découpe) et lors des opérations post opératoires (telles que le déchargement des pièces découpées). Ceci pose un problème de sécurité dans la zone de travail et autour de la machine de découpe.

Une solution connue à ce problème consiste à équiper la machine de découpe de capteurs de présence d'un bras ou d'une main d'un opérateur par exemple se trouvant dans la zone de travail. On se réfèrera par exemple au document EP 1 240 456 B1 qui décrit une machine de découpe munie de capteurs pour détecter optiquement la présence d'un obstacle sur le trajet de l'outil de coupe lors de son déplacement.

En cas de mise en évidence d'une situation anormale (présence d'un obstacle sur le trajet de l'outil de coupe par exemple), les dispositifs de sécurité tel que celui décrit dans le document EP 1 240 456 B1 commandent la coupure de l'alimentation électrique de la machine de découpe arrêtant ainsi son fonctionnement pour protéger l'opérateur.

Bien que satisfaisante pour la sécurité de l'opérateur, l'interruption de la machine de découpe pose un certain nombre de problèmes. Notamment, l'arrêt de la machine se fait au détriment de sa productivité. En effet, l'interruption du programme de découpe entraîne la perte d'informations sur la position de l'outil de coupe au moment de l'arrêt de la machine. Lorsque le fonctionnement de la machine est rétabli, cette perte pose alors des problèmes pour connaître l'emplacement exact de reprise du programme de découpe, ce qui nuit à la productivité de la machine. En outre, certaines opérations manuelles simples (telles que l'élimination d'un pli sur une pièce de tissu ou le rajout d'un morceau de film imperméable à l'air pour rétablir l'étanchéité sur une pièce de tissu) ne peuvent pas être effectuées par l'opérateur pendant un cycle de fonctionnement de la machine sans déclencher son arrêt. Ces opérations nécessitent donc d'être effectuées pendant des interruptions programmées de la machine qui se font au détriment de sa productivité.

### Objet et résumé de l'invention

La présente invention a donc pour but principal de pallier de tels inconvénients en proposant un procédé de gestion de sécurité active pour machine de travail automatique permettant de limiter les pertes de productivité résultant de la détection d'une situation anormale sans pour autant diminuer la protection apportée à l'opérateur.

Ce but est atteint grâce à un procédé de gestion de sécurité active pour une machine de travail automatique comprenant un plan de travail et un outil de travail déplacé dans le plan de travail selon un programme de travail préétabli pour travailler une matière déposée sur le plan de travail, caractérisé en ce qu'il consiste à partager le plan de travail en plusieurs zones délimitées à l'intérieur desquelles une intrusion d'un opérateur peut être détectée, et, au cours du déroulement du programme de travail et en réponse à la détection d'une intrusion d'un opérateur dans une première zone alors que l'outil est actif dans une deuxième zone différente de la première, à effectuer:
- le maintien du déplacement programmé de l'outil à la vitesse normale si le déplacement de l'outil est programmé dans une zone non contiguë à la première ;
- le maintien du déplacement programmé de l'outil à vitesse réduite si le déplacement de l'outil est programmé dans une zone contiguë à la première ; et
- la modification du programme de travail si le déplacement de l'outil est programmé dans la première zone alors que l'intrusion de l'opérateur continue à y être détectée pour pouvoir poursuivre le travail de l'outil dans une zone différente de la première.

En réponse à une détection d'une intrusion d'un opérateur dans une zone du plan de travail et en fonction du déplacement programmé de l'outil de travail par rapport à cette zone, le procédé selon l'invention ordonne une action particulière qui permet d'éviter une situation à risque pour l'opérateur sans pour autant entraîner un arrêt complet de la machine. Il en résulte une limitation des pertes de productivité de la machine tout en garantissant la protection de l'opérateur.

Selon une caractéristique avantageuse de l'invention, dans le cas d'une modification du programme de travail, le déplacement de l'outil dans une zone différente de la première s'effectue à vitesse normale lorsque le déplacement de l'outil est programmé dans une zone non contiguë à la première, et à vitesse réduite lorsque le déplacement de l'outil est programmé dans une zone contiguë à la première.

Selon une autre caractéristique avantageuse de l'invention, au cours du déroulement du programme de travail et en réponse à la détection d'une intrusion d'un opérateur dans une première zone alors que l'outil est actif dans une deuxième zone différente de la première, l'action suivante peut également être effectuée :
- si le déplacement de l'outil est programmé pour rester dans la deuxième zone, maintien du travail programmé de l'outil à la vitesse normale et indication à l'opérateur qu'il peut travailler dans une zone différente de la deuxième.

Cette caractéristique a pour but d'indiquer à l'opérateur qu'il peut travailler sans danger dans une zone du plan de travail. Ainsi, certaines opérations manuelles telles que l'élimination d'un pli, le rajout d'un bout de film imperméable à l'air ou le ramassage de pièces préalablement découpées peuvent être effectuées par l'opérateur pendant un cycle de fonctionnement de la machine sans interrompre cette dernière.

L'invention a également pour objet une machine de travail automatique comprenant un plan de travail partagé en plusieurs zones, un outil de travail déplacé dans le plan de travail selon un programme de travail préétabli pour travailler une matière déposée sur le plan de travail, et des moyens de détection d'une intrusion d'un opérateur dans l'une des zones du plan de travail, caractérisée en ce qu'elle comporte en outre des moyens pour, au cours du déroulement du programme de travail et en réponse à la détection d'une intrusion d'un opérateur dans une première zone alors que l'outil est actif dans une deuxième zone différente de la première, effectuer:
- le maintien du déplacement programmé de l'outil à la vitesse normale si le déplacement de l'outil est programmé dans une zone non contiguë à la première ;
- le maintien du déplacement programmé de l'outil à vitesse réduite si le déplacement de l'outil est programmé dans une zone contiguë à la première ; et
- la modification du programme de travail si le déplacement de l'outil est programmé dans la première zone alors que l'intrusion de l'opérateur continue à y être détectée pour pouvoir poursuivre le travail de l'outil dans une zone différente de la première.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est un schéma montrant différentes étapes de mise en oeuvre d'un procédé de gestion de sécurité active conforme à l'invention ; et
- la figure 2 est une vue schématique d'une machine de découpe pour la mise en oeuvre d'un procédé de gestion de sécurité active conforme à l'invention.

### Description détaillée d'un mode de réalisation

Dans la description qui suit, il est envisagé un procédé de gestion de sécurité active pour une machine de découpe à commande numérique utilisée pour la découpe de tissus, feutres, cuirs ou autres matériaux souples en feuille dans l'industrie de la confection, de l'ameublement...

De manière plus générale, l'invention est applicable aux machines de travail d'une matière à l'aide d'un outil déplacé dans un plan de travail selon un programme de travail préétabli. Il en est ainsi, par exemple, des machines de découpe, de traçage ou de gravage.

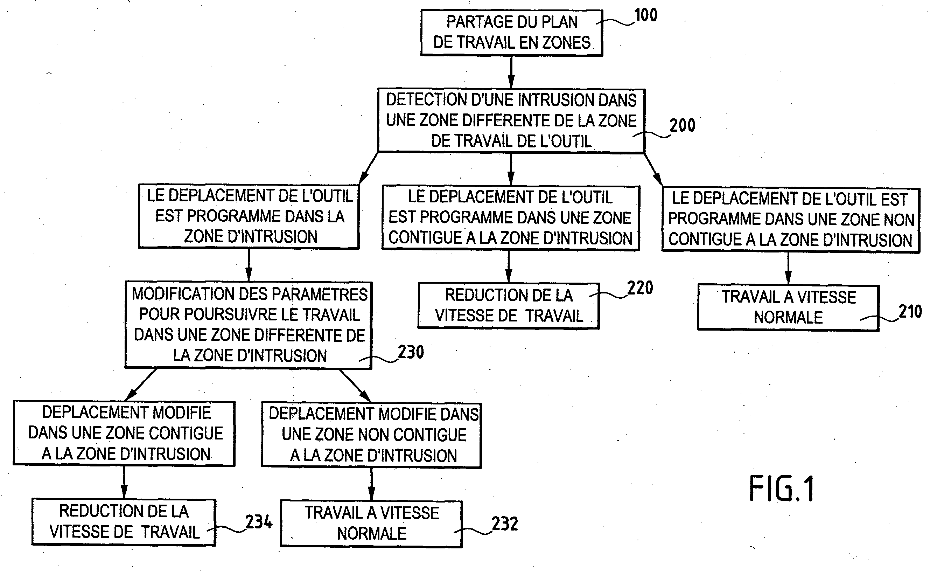

On se réfèrera d'abord à la figure 1 qui représente les étapes d'un mode particulier de réalisation d'un procédé de gestion de sécurité active selon l'invention.

Selon une première étape (100) du procédé, on partage en plusieurs zones géométriques le plan de travail. Ce partage peut être réalisé, soit par rapport à la table de coupe (les zones correspondent à des surfaces géométriques de la table), soit par rapport aux pièces à découper qui sont sur la table de coupe (les zones du partage englobent alors un nombre entier de pièces à découper).

Selon une seconde étape (200) du procédé, au cours du déroulement du programme de coupe et en réponse à la détection d'une intrusion d'un opérateur dans une première zone alors que l'outil de coupe est actif dans une deuxième zone différente de la première, on effectue au moins l'une des actions suivantes :
- si le déplacement de l'outil est programmé dans une zone non contiguë à la première zone, le déplacement programmé de l'outil de coupe est maintenu à la vitesse normale (210) ;
- si le déplacement de l'outil est programmé dans une zone contiguë à la première zone, le déplacement programmé de l'outil de coupe est maintenu mais à vitesse réduite (220) ; et
- si le déplacement de l'outil de coupe est programmé dans la première zone alors que l'intrusion de l'opérateur continue à y être détectée, le programme de travail est modifié pour pouvoir poursuivre le travail de l'outil dans une zone différente de la première (230).

Par zone contiguë à la première zone, il faut comprendre une zone du partage de la table ayant un côté en commun avec la première zone.

Avantageusement, dans le cas d'une modification du programme de travail (230), le déplacement de l'outil de coupe dans une zone différente de la première s'effectue à vitesse normale lorsque le déplacement de l'outil est programmé dans une zone non contiguë à la première (232), et à vitesse réduite lorsque le déplacement de l'outil est programmé dans une zone contiguë à la première (234).

Toujours avantageusement, au cours du déroulement du programme de coupe et en réponse à la détection d'une intrusion d'un opérateur dans une première zone alors que l'outil est actif dans une deuxième zone différente de la première, l'action suivante peut également être effectuée :
- si le déplacement de l'outil est programmé pour rester dans la deuxième zone, le travail programmé de l'outil de coupe est maintenu à la vitesse normale et une indication est communiquée à l'opérateur qu'il peut travailler dans une zone différente de la deuxième.

### Exemple d'application du procédé de gestion de sécurité active

Cet exemple concerne la gestion de sécurité active pour une machine de découpe de matériaux souples à commande numérique.

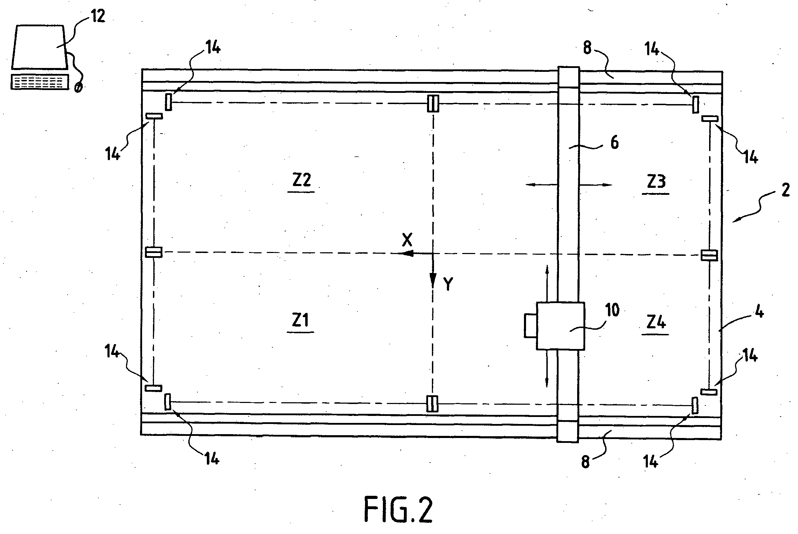

La figure 2 représente de façon schématique et partielle une telle machine de découpe.

De façon connue en soi, cette machine comporte une table 2 proprement dite dont la face supérieure 4 constitue le plan de travail. Audessus de la table, un portique 6 est apte à se déplacer le long de guides 8 disposés suivant l'axe tongitudinal X de la table.

Le portique 6 porte une tête de coupe 10 qui est mobile le long du portique suivant la direction Y sensiblement perpendiculaire à la direction X. Ainsi, la tête de coupe 10 peut atteindre n'importe quel point du plan de travail 4.

La tête de coupe 10 est équipée d'une lame de coupe (non représentée) pour découper les contours souhaités dans un matériau souple, par exemple du textile, déposé sur la table.

La machine peut aussi comporter de moyens d'établissement d'une dépression à la surface de la table afin d'assurer le maintien de la matière à découper sur le plan de travail.

Un ordinateur 12 de commande numérique de la tête de découpe permet de programmer et de commander les opérations de lancement de la découpe et du déplacement du portique 8 et de la tête de coupe 10 lors de la réalisation des pièces dans le matériau souple.

Selon la première étape du procédé de gestion de sécurité active, un partage en plusieurs zones géométriques du plan de travail est réalisé.

Dans l'exemple d'application de la figure 2, le plan de travail 4 est ainsi partagé en quatre zones rectangulaires Z1 à Z4 de dimensions sensiblement égales. Bien entendu, le nombre et la forme des zones de partage du plan de travail pourraient être différents.

La seconde étape du procédé prévoit la détection au cours du déroulement du programme de coupe d'une intrusion d'un opérateur dans l'une des zones Z1 à Z4 du plan de travail.

La machine de découpe de ce type étant accessible des deux côtés, ainsi qu'à l'avant et à l'arrière de la table, la détection d'une intrusion peut par exemple être réalisée à l'aide de capteurs de présence reliés à l'ordinateur de commande numérique de la machine.

Ainsi, dans l'exemple d'application de la figure 2, il est prévu huit capteurs optiques 14 optiques formés par des paires d'émetteurs et de récepteurs qui sont disposées autour de la table 2 de manière à délimiter les zones Z1 à Z4 de partage du plan de travail. Lorsque l'un des faisceaux optiques est coupé par un obstacle (un bras ou une main de l'opérateur par exemple), un signal est transmis à l'ordinateur 12 de commande numérique.

Alternativement, la détection d'une intrusion dans l'une des zones du plan de travail pourrait être effectuée à l'aide de capteurs différents, tels que des capteurs à ultrasons ou électroniques par exemple, ou bien encore au moyen de caméras reliées à l'ordinateur de commande numérique.

Lorsqu'une intrusion d'un opérateur est ainsi détectée dans l'une des zones de partage du plan travail, l'information est transmise à l'ordinateur 12 de commande numérique pour analyse. En réponse, l'ordinateur peut programmer différentes actions suivant l'emplacement de l'outil de coupe, son déplacement programmé et la zone d'intrusion. Des exemples sont détaillés ci-dessous.

### Situation 1

Une intrusion d'un opérateur est détectée en zone Z2 par les capteurs optiques 14 disposés autour de la table. La tête de coupe 10 est située dans la zone Z4 et le déplacement de l'outil de coupe est programmé dans cette même zone Z4.

Etant donné que la zone d'intrusion Z2 et la zone Z4 de déplacement programmé de l'outil de coupe sont des zones non contiguës (elles n'ont aucun côté en commun), l'ordinateur 12 de commande de la tête de coupe maintient alors le déplacement programmé de l'outil dans la zone Z4 à la vitesse normale.

### Situation 2

Une intrusion d'un opérateur est détectée en zone Z2 par les capteurs optiques 14. La tête de coupe 10 est située dans la zone Z4 et le déplacement de l'outil de coupe est programmé dans la zone Z3.

Du fait que la zone Z3 de déplacement programmé de l'outil de coupe est contiguë à la zone d'intrusion Z2 (ces zones ont un côté en commun), l'ordinateur 12 de commande de la tête de coupe maintient alors le déplacement programmé de l'outil dans la zone Z3 mais à une vitesse qui est réduite tant que l'intrusion de l'opérateur continue à être détectée dans la zone Z2.

### Situation 3

Une intrusion d'un opérateur est détectée en zone Z1 par les capteurs optiques 14. La tête de coupe 10 est située dans la zone Z4 et le déplacement de l'outil de coupe est programmé dans la zone d'intrusion Z1.

L'ordinateur 12 de commande de la tête de coupe modifie alors le déplacement de la tête de coupe pour pouvoir poursuivre le travail de l'outil dans une zone différente de la zone Z1, c'est-à-dire, soit dans la zone Z2, soit dans la zone Z3.

Si la modification du programme de déplacement de la tête de coupe entraîne un déplacement de celle-ci dans la zone Z2 qui est contiguë à la zone d'intrusion Z1, ce déplacement s'effectuera à une vitesse qui sera réduite tant que l'intrusion continue à être détectée. En revanche, si cette modification résulte dans un déplacement de la tête de coupe dans la zone Z3 non contiguë à la zone d'intrusion Z1, le déplacement s'opérera à la vitesse normale.

### Situation 4

Une intrusion d'un opérateur est détectée en zone Z1 par les capteurs optiques 14. La tête de coupe 10 est située dans la zone Z4 et le déplacement de l'outil de coupe est programmé pour rester dans cette même zone Z4 (aucun changement de zone n'est programmé).

L'ordinateur 12 de commande de la tête de coupe maintient alors le travail programmé de l'outil dans la zone Z4 à la vitesse normale. En outre, il peut indiquer à l'opérateur qu'il peut travailler dans une zone différente de la zone de travail Z4 (c'est-à-dire, soit dans la zone Z2, soit dans la zone Z3). Ce travail peut par exemple consister dans le ramassage des pièces qui ont été préalablement découpées dans ces zones Z2 et Z3. Pendant la durée de ces travaux, l'ordinateur 12 continue de « surveiller » d'éventuelles intrusions de l'opérateur.

Bien entendu, quelle que soit la situation décrite ci-dessus, l'ordinateur de commande pourra également émettre une alarme visuelle ou sonore afin de prévenir l'opérateur d'un danger potentiel.

En outre, dans le cas d'une situation extrême non décrite ci-dessus, lorsqu'une intrusion d'un opérateur est détectée dans la même zone que celle de travail de l'outil de coupe, l'ordinateur commandera l'arrêt de la machine de coupe afin de protéger l'opérateur.

## Revendications

1. Procédé de gestion de sécurité active pour une machine de travail automatique comprenant un plan de travail et un outil de travail déplacé dans le plan de travail selon un programme de travail préétabli pour travailler une matière déposée sur le plan de travail, **caractérisé en ce qu'**il consiste à :
- partager (100) le plan de travail en plusieurs zones délimitées à l'intérieur desquelles une intrusion d'un opérateur peut être détectée, et
- au cours du déroulement du programme de travail et en réponse à la détection (200) d'une intrusion d'un opérateur dans une première zone alors que l'outil est actif dans une deuxième zone différente de la première, effectuer:
- le maintien (210) du déplacement programmé de l'outil à la vitesse normale si le déplacement de l'outil est programmé dans une zone non contiguë à la première ;
- le maintien (220) du déplacement programmé de l'outil à vitesse réduite si le déplacement de l'outil est programmé dans une zone contiguë à la première ; et
- la modification (230) du programme de travail si le déplacement de l'outil est programmé dans la première zone alors que l'intrusion de l'opérateur continue à y être détectée pour pouvoir poursuivre le travail de l'outil dans une zone différente de la première.

2. Procédé selon la revendication 1, **caractérisé en ce que**, dans le cas d'une modification (230) du programme de travail, le déplacement de l'outil dans une zone différente de la première s'effectue à vitesse normale lorsque le déplacement de l'outil est programmé dans une zone non contiguë à la première (232) et à vitesse réduite lorsque le déplacement de l'outil est programmé dans une zone contiguë à la première (234).

3. Procédé selon l'une des revendications 1 et 2, **caractérisé en ce que**, au cours du déroulement du programme de travail et en réponse à la détection d'une intrusion d'un opérateur dans une première zone alors que l'outil est actif dans une deuxième zone différente de la première, l'action suivante peut également être effectuée :
- si le déplacement de l'outil est programmé pour rester dans la deuxième zone, maintien du travail programmé de l'outil à la vitesse normale et indication à l'opérateur qu'il peut travailler dans une zone différente de la deuxième.

4. Machine de travail automatique comprenant un plan de travail (4) partagé en plusieurs zones (Z1 à Z4), un outil de travail (10) déplacé dans le plan de travail selon un programme de travail préétabli pour travailler une matière déposée sur le plan de travail, et des moyens (14) de détection d'une intrusion d'un opérateur dans l'une des zones (Z1 à Z4) du plan de travail (4), **caractérisée en ce qu'**elle comporte en outre des moyens (12) pour, au cours du déroulement du programme de travail et en réponse à la détection d'une intrusion d'un opérateur dans une première zone alors que l'outil (10) est actif dans une deuxième zone différente de la première, effectuer:
- le maintien du déplacement programmé de l'outil (10) à la vitesse normale si le déplacement de l'outil est programmé dans une zone non contiguë à la première ;
- le maintien du déplacement programmé de l'outil (10) à vitesse réduite si le déplacement de l'outil est programmé dans une zone contiguë à la première ; et
- la modification du programme de travail si le déplacement de l'outil (10) est programmé dans la première zone alors que l'intrusion de l'opérateur continue à y être détectée pour pouvoir poursuivre le travail de l'outil dans une zone différente de la première.

## Patentansprüche

1. Verfahren zum aktiven Sicherheitsmanagement für eine automatische Arbeitsmaschine mit einer Arbeitsebene und einem Arbeitswerkzeug, das in der Arbeitsebene entsprechend einem zuvor festgelegten Arbeitsprogramm bewegt wird, um ein auf die Arbeitsebene aufgelegtes Material zu bearbeiten, **dadurch gekennzeichnet, dass** es darin besteht:
- die Arbeitsebene in mehrere begrenzte Bereiche aufzuteilen (100), innerhalb derer ein Eindringen einer Bedienungsperson erfasst werden kann, und
- im Zuge des Ablaufs des Arbeitsprogramms und als Reaktion auf das Erfassen (200) eines Eindringens einer Bedienungsperson in einen ersten Bereich, während das Werkzeug in einem von dem ersten verschiedenen zweiten Bereich aktiv ist, folgendes durchzuführen:
- das Beibehalten (210) der programmierten Bewegung des Werkzeugs mit normaler Geschwindigkeit, wenn die Bewegung des Werkzeugs in einem nicht an den ersten angrenzenden Bereich programmiert ist,
- das Beibehalten (220) der programmierten Bewegung des Werkzeugs mit verminderter Geschwindigkeit, wenn die Bewegung des Werkzeugs in einem an den ersten angrenzenden Bereich programmiert ist, und
- die Änderung (230) des Arbeitsprogramms, wenn die Bewegung des Werkzeugs in dem ersten Bereich programmiert ist, während das Eindringen der Bedienungsperson dort weiterhin erfasst wird, um die Arbeit des Werkzeugs in einem von dem ersten verschiedenen Bereich fortsetzen zu können.

2. Verfahren nach Anspruch 1, **dadurch gekennzeichnet, dass** im Fall einer Änderung (230) des Arbeitsprogramms die Bewegung des Werkzeugs in einem von dem ersten verschiedenen Bereich mit normaler Geschwindigkeit erfolgt, wenn die Bewegung des Werkzeugs in einem nicht an den ersten angrenzenden Bereich programmiert ist (232), und mit verminderter Geschwindigkeit erfolgt, wenn die Bewegung des Werkzeugs in einem an den ersten angrenzenden Bereich programmiert ist (234).

3. Verfahren nach einem der Ansprüche 1 und 2, **dadurch gekennzeichnet, dass** im Zuge des Ablaufs des Arbeitsprogramms und als Reaktion auf das Erfassen eines Eindringens einer Bedienungsperson in einen ersten Bereich, während das Werkzeug in einem von dem ersten verschiedenen zweiten Bereich aktiv ist, auch die folgende Aktion durchgeführt werden kann:
- wenn die Bewegung des Werkzeugs programmiert ist, in dem zweiten Bereich zu bleiben, Beibehalten der programmierten Arbeit des Werkzeugs mit normaler Geschwindigkeit und die Bedienungsperson darauf hinweisen, dass sie in einem von dem zweiten verschiedenen Bereich arbeiten kann.

4. Automatische Arbeitsmaschine, umfassend eine in mehrere Bereiche (Z1 bis Z4) unterteilte Arbeitsebene (4), ein Arbeitswerkzeug (10), das in der Arbeitsebene entsprechend einem zuvor festgelegten Arbeitsprogramm bewegt wird, um ein auf die Arbeitsebene aufgelegtes Material zu bearbeiten, sowie Mittel (14) zum Erfassen eines Eindringens einer Bedienungsperson in einen der Bereiche (Z1 bis Z4) der Arbeitsebene (4), **dadurch gekennzeichnet, dass** sie ferner Mittel (12) umfasst, um im Zuge des Ablaufs des Arbeitsprogramms und als Reaktion auf das Erfassen eines Eindringens einer Bedienungsperson in einen ersten Bereich, während das Werkzeug (10) in einem von dem ersten verschiedenen zweiten Bereich aktiv ist, folgendes durchzuführen:
- das Beibehalten der programmierten Bewegung des Werkzeugs (10) mit normaler Geschwindigkeit, wenn die Bewegung des Werkzeugs in einem nicht an den ersten angrenzenden Bereich programmiert ist,
- das Beibehalten der programmierten Bewegung des Werkzeugs (10) mit verminderter Geschwindigkeit, wenn die Bewegung des Werkzeugs in einem an den ersten angrenzenden Bereich programmiert ist, und
- die Änderung des Arbeitsprogramms, wenn die Bewegung des Werkzeugs (10) in dem ersten Bereich programmiert ist, während das Eindringen der Bedienungsperson dort weiterhin erfasst wird, um die Arbeit des Werkzeugs in einem von dem ersten verschiedenen Bereich fortsetzen zu können.

## Claims

1. Method for managing active safety for an automatically operating machine comprising a work surface and a work tool displaced on the work surface according to a pre-established work program for working on material placed on the work surface, **characterized in that** it consists of:
- dividing (100) the work surface into several delimited zones inside which an operator's intrusion can be detected, and
- during the work program cycle and in response to detection (200) of an operator's intrusion into a first zone when the tool is active in a second zone, other than the first one, carrying out:
- keeping (210) the tool's programmed displacement at the normal speed if the tool displacement is programmed in a zone not adjacent to the first one,
- keeping (220) the tool's programmed displacement at a reduced speed if the tool displacement is programmed in a zone adjacent to the first one, and
- modifying (230) the work program if the tool displacement is programmed in the first zone when the operator's intrusion continues to be detected there so that the tool's work can be continued in a zone other than the first one.

2. Method according to claim 1, **characterized in that**, in the case of modifying (230) the work program, the tool displacement in a zone other than the first one is carried out at normal speed when the tool displacement is programmed in a zone not adjacent to the first one (232) and at reduced speed when the tool displacement is programmed in a zone adjacent to the first one (234).

3. Method according to either of claims 1 or 2, **characterized in that**, during the work program cycle and in response to detection of an operator's intrusion into a first zone when the tool is active in a second zone, other than the first one, the following action can also be carried out:
- if the tool displacement is programmed to remain in the second zone, keeping the tool's programmed work at the normal speed and indicating to the operator that he can work in a zone other than the second one.

4. Automatically operating machine comprising a work surface (4) divided into several zones (Z1 to Z4), a work tool (10) displaced on the work surface according to a pre-established work program for working on a material placed on the work surface and means (14) for detecting an operator's intrusion into one of the zones (Z1 to Z4) of the work surface (4), **characterized in that** it also comprises means (12) for carrying out, during the work program cycle and in response to detection of an operator's intrusion into a first zone when the tool (10) is active in a second zone, other than the first one:
- keeping the programmed displacement of the tool (10) at the normal speed if the tool displacement is programmed in a zone not adjacent to the first one,
- keeping the programmed displacement of the tool (10) at reduced speed if the tool displacement is programmed in a zone adjacent to the first one and
- modifying the work program if the displacement of the tool (10) is programmed in the first zone when the operator's intrusion continues to be detected there so that the tool's work can be continued in a zone other than the first one.
